# EUROPÄISCHE PATENTSCHRIFT

(11) **EP 3 184 350 B1**
(45) Veröffentlichungstag und Bekanntmachung des Hinweises auf die Patenterteilung: **06.04.2022**
(21) Anmeldenummer: 16202688.4
(22) Anmeldetag: 07.12.2016
(51) Int. Cl.: B60L 5/36, B60L 5/38, B60L 5/40, B60L 9/00, B60M 1/18

(54) **SCHIENENFAHRZEUG UND TRANSPORTSYSTEM**
RAIL VEHICLE AND TRANSPORT SYSTEM
VÉHICULE SUR RAIL ET SYSTÈME DE TRANSPORT

(30) Priorität: 22.12.2015 DE 102015122622
(43) Veröffentlichungstag der Anmeldung: 28.06.2017
(73) Patentinhaber: Bombardier Transportation GmbH, 10785 Berlin (DE)
(72) Erfinder: Heidrich, Peter, 67067 Ludwigshafen (DE)
(74) Vertreter: Zimmermann & Partner Patentanwälte mbB

(56) Entgegenhaltungen:
- EP-A1- 2 189 320
- WO-A2-2013/160135
- WO-A2-2014/005837
- DE-A1-102014 208 245
- JP-A- 2002 058 110

## Beschreibung

### Technisches Gebiet

Die vorliegende Erfindung betrifft ein Schienenfahrzeug mit zwei Stromabnehmern, insbesondere Gleichstromschienenfahrzeug mit zwei Stromabnehmern, sowie ein Transportsystem mit einem derartigen Schienenfahrzeug.

### Vorbekannter Stand der Technik

Nahverkehrsschienenfahrzeuge, insbesondere U-Bahnen und S-Bahnen werden vielfach über seitliche Stromschienen, die auch als dritte Schienen bezeichnet werden, mit elektrischer Energie versorgt. Zur Kontaktierung mit der seitlichen Stromschiene sind oft mehrere, seitlich am Schienenfahrzeug angeordnete Stromabnehmer vorgesehen, die als Seitenstromabnehmer bezeichnet werden. Durch die Verwendung mehrerer Stromabnehmer pro Schienenfahrzeug kann zum einen der elektrische Stromfluss verteilt werden. Zum anderen kann ein derartiges Schienenfahrzeug auch kurze Lücken in der Stromschiene überbrücken, ohne dass die Versorgung des Schienenfahrzeugs mit elektrischer Energie unterbrochen wird.

So beschreibt die EP 0691 236 A1 ein Verfahren zur Überbrückung von Lücken in der Stromversorgung von elektrischen, stromrichtergespeisten Schienenfahrzeugen, die an ihren beiden Enden mit Stromabnehmern zur Kontaktierung mit der Stromversorgung versehen sind. Sobald ein in Fahrtrichtung vorderer Stromabnehmer keinen Kontakt zur Stromversorgung hat, wird ein Traktionsstromrichter während einer Zeitspanne, in der das Schienenfahrzeug eine Wegstrecke zurücklegt, die möglichst nur geringfügig kleiner als der Abstand zwischen den vorderen und hinteren Stromabnehmern ist, vom Fahrbetrieb in den Stützbremsbetrieb, d.h. in einen generatorischen Betriebszustand, oder vom Bremsbetrieb in den Stützbremsbetrieb umgesteuert.

Die DE 43 18934 C1 beschreibt eine Systemtrennstelle für Fahrleitungen im elektrischen Bahnbetrieb, die aneinandergrenzende Fahrleitungsstrecken verschiedener Strom- und/oder Spannungssysteme mechanisch verbindet, jedoch potentialmäßig trennt und unter Anwendung von Kurzschlussauslösesystemen in geerdeten Schutzstreckenabschnitten für eine Auslösung der benachbarten Streckenschalter der Systeme sorgt. Um zu verhindern, dass weder Schäden durch unzulässige Verbindung der beiden Stromsysteme über das Fahrzeug noch Schäden auf dem Fahrzeug selbst entstehen, wird dem jeweiligen Kurzschlußauslösesystem im Erdungsabschnitt eine Spannungsüberwachung mit räumlich und/oder zeitlich früherer Auslösung vorgeschaltet.

WO 2013/160135 offenbart ein Schienenfahrzeug mit mehreren Stromabnehmern. Ein weiteres Schienenfahrzeug ist ebenfalls in EP 2 189 320 offenbart.

Bei Gleichstromschienenfahrzeugen sollte der Abstand von miteinander verbundenen Seitenstromabnehmern die Länge einer sich typischerweise vor und nach einer Haltestelle angeordneten Trennstelle, die zwei Einspeiseabschnitte voneinander trennt, nicht überschreiten. Eine solche Stromabnehmeranordnung führt jedoch zu einem Rucken im Fahrzeug beim Überfahren der Trennstelle. Auch bricht das Bordnetz in diesem Bereich ein und bedarf einer Stützung aus der Fahrzeugbatterie. Wird der Abstand der miteinander verbundenen Seitenstromabnehmer jedoch größer gewählt, kann ein Fehlerfall dazu führen, dass durch die Zugsammelschiene des Fahrzeugs über die Seitenstromabnehmer ein geerdeter Einspeiseabschnitt mit einem nicht geerdeten und noch aktiven Einspeiseabschnitt verbunden wird.

### Nachteile des Standes der Technik

Zwar gibt es Schienenfahrzeuge, die aufgrund ihres Stromabnehmerabstands eine Netztrennstelle zwischen von verschiedenen Versorgungseinrichtungen, insbesondere Unterwerken, gespeisten Stromversorgungsleitungen oder -schienen überbrücken können. Dabei kann es jedoch je nach Netztopologie zu Gefährdungen bzw. zu Unterwerksauslösungen kommen, falls keine aufwendigen Schutzmaßnahmen ergriffen werden.

### Problemstellung

Es ist daher eine Aufgabe der vorliegenden Erfindung, eine einfache Lösung bereitzustellen, die es einem Schienenfahrzeug, insbesondere einem Gleichstromschienenfahrzeug erlaubt, Netztrennstellen zu durchfahren, ohne dass es zu Beeinträchtigungen und Gefährdungen des Schienenfahrzeugs und von Stromversorgungseinrichtungen kommt.

### Erfindungsgemäße Lösung

Diese Aufgabe wird durch ein Schienenfahrzeug gemäß Anspruch 1 und durch ein Transportsystem gemäß Anspruch 9 gelöst.

Gemäß einer Ausführungsform weist ein Schienenfahrzeug einen ersten Stromabnehmer, einen zweiten Stromabnehmer und ein Schaltschütz auf. Das Schaltschütz ist elektrisch mit dem ersten Stromabnehmer und dem zweiten Stromabnehmer verbunden, und eingerichtet, einen Stromfluss zwischen dem ersten Stromabnehmer und dem zweiten Stromabnehmer zu unterbrechen, wenn der Stromfluss einen ersten Schwellwert überschreitet und/oder wenn ein Anstieg des Stromflusses einen zweiten Schwellwert überschreitet.

Im Schienenfahrzeug ist nur ein Schaltschütz zwischen dem ersten Stromabnehmer und dem zweiten Stromabnehmer angeordnet.

Beispielsweise kann das Schaltschütz über jeweilige Abschnitte einer Zugsammelschiene des Schienenfahrzeugs mit dem ersten Stromabnehmer und dem zweiten Stromabnehmer elektrisch verbunden sein.

Das Schaltschütz wird typischerweise so ausgewählt, bzw. der erste und zweite Schwellenwert des Schaltschützes so eingestellt, dass das Schaltschütz bei Stromflüssen bzw. Stromflussänderungen (zwischen dem ersten Stromabnehmer und dem zweiten Stromabnehmer) schaltet, die signifikant unterhalb von Werten für einen zu erwartenden Fehlerstrom liegen, der ohne das Schaltschütz in einem Fehlerfall beim Überfahren einer Netztrennstelle zwischen dem ersten Stromabnehmer und dem zweiten Stromabnehmer auftreten könnte. Beispielsweise kann der erste Schwellenwert 150 % bis 200% oder sogar 300 % einer Nennstromaufnahme des Schienenfahrzeugs betragen. Damit kann erreicht werden, dass das Schaltschütz im Fehlerfall eher schaltet als Einspeiseschütze von das Schienentransportsystem elektrisch versorgenden Unterwerken.

Wenn das Schienenfahrzeug eine Netztrennstelle zwischen zwei durch ein jeweiliges Unterwerk gespeiste Versorgungsabschnitte eines Schienentransportsystems überfährt, von denen auf Grund eines Fehlers einer der Versorgungsabschnitte geerdet ist, wird durch das Schaltschütz eine ggf. über den ersten und zweiten Stromabnehmer aufgebaute elektrische Verbindung zwischen den zwei Versorgungsabschnitten innerhalb von typischerweise wenigen Millisekunden wieder getrennt. Dadurch können Unterwerksauslösungen durch einen Schienenfahrtzeug-vermittelten Kurzschluss vermieden werden. Damit können einerseits hohe Schaltströme im Unterwerk und somit verbundene Belastungen des Unterwerks vermieden werden, andererseits kann der Schienenverkehr auf dem gespeisten Versorgungsabschnitt unbeeinträchtigt weiter erfolgen.

Da das Schienenfahrzeug Unterwerksauslösungen zuverlässig vermeidet, kann ein Abstand zwischen dem ersten Stromabnehmer und dem zweiten Stromabnehmer in Fahrtrichtung des Schienenfahrzeugs auch bei einem Gleichstromschienenfahrzeug größer als eine Länge von typischerweise einigen Metern bis höchstens 38 m der überbrückbaren Netztrennstelle(n) des Schienentransportsystems sein. Damit kann das Schienenfahrzeug mit einer typischen Fahrzeuglänge von mehr als 50 m die Netztrennstelle(n) zwischen betriebsgemäß durch jeweilige Unterwerke gespeiste Versorgungsabschnitte durchfahren, ohne dass die elektrische Versorgung des Schienenfahrzeugs unterbrochen wird, und somit praktisch ruckfrei.

Beispielsweise können der erste Stromabnehmer in einem vorderen Wagenteil des Schienenfahrzeugs und der zweite Stromabnehmer in einem hinteren Wagenteil des Schienenfahrzeugs angeordnet sein.

Außerdem können die Stromabnehmer als Seitenstromabnehmer ausgeführt sein, die in einem Fahrwerksbereich des Schienenfahrzeugs, typischerweise nahe einer Drehachse eines jeweiligen Drehgestells des Fahrwerksbereichs, angeordnet sind.

Das Schienenfahrzeug kann eine erste elektrische Antriebseinheit, die elektrisch mit dem ersten Stromabnehmer verbunden ist, und eine zweite elektrische Antriebseinheit, die elektrisch mit dem zweiten Stromabnehmer verbunden ist, aufweisen. Die erste elektrische Antriebseinheit und die zweite elektrische Antriebseinheit können jeweils einen Konverter und einen mit dem Konverter gekoppelten Elektromotor, z.B. einen Wechselrichter und eine mit dem Wechselrichter verbundene Drehstrom-Asynchronmaschine aufweisen.

Typischerweise sind die erste elektrische Antriebseinheit und die zweite elektrische Antriebseinheit eingerichtet, eine elektrische Leistung in einem Bremsbetrieb des Schienenfahrzeugs (generatorischer Betriebszustand der elektrischen Antriebseinheiten) zurückzuspeisen.

Da die erste elektrische Antriebseinheit und die zweite elektrische Antriebseinheit im Normalbetrieb sowie im Bremsbetrieb bei geschlossenem Schaltschütz miteinander elektrisch verbunden sind, kann zwischen der ersten elektrische Antriebseinheit und der zweiten elektrische Antriebseinheit ein Ausgleichstrom fließen. Dies ermöglicht, bei einer entsprechenden Aufnahmekapazität des Versorgungsnetzes, mehr Bremsenergie in elektrische Energie umzuwandeln und in das Versorgungsnetz zurückzuspeisen, als dies bei einem Schienenfahrzeug mit elektrisch voneinander getrennten elektrischen Antriebseinheiten möglich ist.

Daher ist das Schaltschütz typischerweise so ausgewählt, dass es bei im Bremsbetrieb erwarteten Ausgleichströmen, die zwischen den Antriebseinheiten fließen können, nicht trennt (öffnet).

Bei dem Schienenfahrzeug kann es sich um einen Triebwagen eines Nahverkehrszuges, insbesondere einen Triebwagen einer Gleichstrombahn, z.B. einen S-Bahn-Triebwagen oder U-Bahn-Triebwagen handeln.

Gemäß einer Ausführungsform weist ein Transportsystem eine Schiene, eine entlang der Schiene angeordnete Stromschiene, und ein Schienenfahrzeug mit einem ersten Stromabnehmer, einem zweiten Stromabnehmer und einem Schaltschütz auf. Das Schaltschütz ist elektrisch mit dem ersten Stromabnehmer und dem zweiten Stromabnehmer verbunden und eingerichtet, einen Stromfluss zwischen dem ersten Stromabnehmer und dem zweiten Stromabnehmer, wenn der Stromfluss einen ersten Schwellwert nicht überschreitet und/oder wenn ein Anstieg des Stromflusses einen zweiten Schwellwert nicht überschreitet, zu ermöglichen. Der erste Stromabnehmer und der zweite Stromabnehmer sind mit der Stromschiene verbindbar, wenn das Schienenfahrzeug auf der Schiene des Transportsystems angeordnet ist. Im normalen Fahrbetrieb sind der erste Stromabnehmer und der zweite Stromabnehmer außerhalb von Netztrennstellen mit der Stromschiene verbunden.

Typischerweise hat die Stromschiene einen ersten Abschnitt und einen zweiten Abschnitt, die durch eine Netztrennstelle voneinander getrennt sind. Der erste Abschnitt der Stromschiene ist über ein erstes Einspeiseschütz mit einer ersten Gleichstromspannungsquelle, bspw. einem ersten Unterwerk, verbindbar. Der zweite Abschnitt der Stromschiene ist über ein zweites Einspeiseschütz mit einer zweiten Gleichstromspannungsquelle, bspw. einem zweiten Unterwerk, verbindbar. Dabei sind das erste Einspeiseschütz und das zweite Einspeiseschütz so ausgeführt ist, dass ein durch das jeweilige Einspeiseschütz fließender Strom erst dann unterbrochen wird, wenn eine Stromstärke des Stroms einen Schwellwert überschreitet, der größer als der erste Schwellwert, typischerweise zumindest doppelt so groß, noch typischer zumindest 5 mal so groß wie der erste Schwellwert ist, und/oder wenn ein Anstieg der Stromstärke des Stroms einen Schwellwert überschreitet, der größer als der zweite Schwellwert, typischerweise zumindest doppelt so groß, noch typischer zumindest 5 mal so groß wie der zweite Schwellwert ist.

Dadurch, dass weder das erste Einspeiseschütz noch das zweite Einspeiseschütz die Verbindung des Schienenfahrzeugs zur jeweiligen Gleichstromspannungsquelle schon unterbricht (öffnet), wenn der Stromfluss durch das jeweilige Schaltschütz nur den ersten Schwellwert überschreitet und/oder wenn der Anstieg des Stromflusses durch das jeweilige Schaltschütz nur den zweiten Schwellwert überschreitet, können Unterwerksauslösungen durch das Schienenfahrzeug vermieden werden, die anderenfalls beim Überfahren der Netztrennstelle entstehen können, wenn in einem Fehlerfall eines der Unterwerke auf Masse liegt.

Zudem kann ein Schienenfahrzeug mit über das Schaltschütz gekoppelten elektrischen Antriebseinheiten im Stützbremsbetrieb mehr Leistung in die Gleichstromspannungsquellen zurückspeisen, als dies bei vergleichbaren Schienenfahrzeugen möglich ist.

Typischerweise ist ein Abstand zwischen dem ersten Stromabnehmer und dem zweiten Stromabnehmer größer als eine Länge der überbrückbaren Netztrennstelle des Transportsystems. Dies ermöglicht es dem Schienenfahrzeug, die überbrückbaren Netztrennstellen zwischen elektrisch gespeisten Abschnitten unterbrechungsfrei zu durchfahren.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.

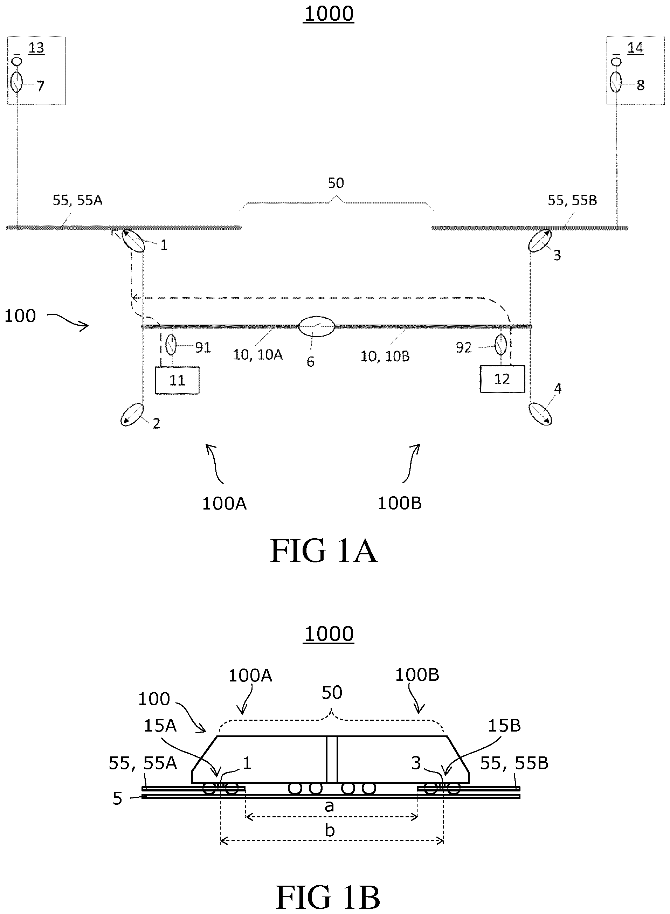

Figur 1a zeigt ein Transportsystem mit einem Schienenfahrzeug gemäß einer Ausführungsform der Erfindung.

Figur 1B zeigt eine schematische Seitenansicht des Schienenfahrzeugs aus Fig. 1A beim Überfahren einer Netztrennstelle gemäß einer Ausführungsform.

### Ausführungsbeispiele

Figur 1A zeigt einen Ausschnitt eines Schaltplans und Figur 1B eine Seitenansicht eines Transportsystems 1000 mit einem auf die Schienen 5 des Transportsystems 1000 aufgesetzten Schienenfahrzeug 100. Dabei befindet sich das Schienenfahrzeug 100 in einem Übergangsbereich zwischen einem ersten Abschnitten 55A und einen zweiten Abschnitt 55B einer Stromschiene 55 des Transportsystems 1000. Der erste Abschnitt 55A und der zweite Abschnitt 55B sind durch eine überbrückbare Netztrennstelle (Unterbrechung, Lücke) 50 voneinander getrennt sind und werden jeweils von einem eigenen Unterwerk 13, 14 gespeist. Aus Sicherheitsgründen versorgen die Stromquellen der Unterwerke 13, 14 ihren zugeordneten Abschnitt 55A, 55B der Stromschiene 55 typischerweise über ein jeweiliges in Normalstellung geschlossenes Einspeiseschütz 7, 8.

In dem exemplarischen Ausführungsbeispiel handelt es sich bei dem Schienenfahrzeug 100 um ein gleichstrombetriebenes Schienenfahrzeug, typischerweise um einen mit elektrischem Gleichstrom angetriebenen Triebwagen eines Nahverkehrssystems 1000, z.B. einen S-Bahn-Triebwagen oder einen U-Bahn-Triebwagen. Aus Gründen der Übersichtlichkeit wird darauf verzichtet, die Verbindung der Unterwerke 13, 14 mit der als Masseanschluss fungierenden Schiene 5 darzustellen. Außerdem ist nur einer von typischerweise mehreren Triebwagen 100 dargestellt. Es kann sich aber auch um ein anderes elektrisch angetriebenes Schienenfahrzeug handeln.

Aus Sicherheitsgründen sind die Stromschienen 55 häufig, z.B. bei U-Bahnen, beidseitig der Gleise bzw. Schiene 5 angeordnet, jedoch abwechselnd. In Haltestellenbereichen sind die Stromschienen 55 auf der dem Bahnsteig abgewandten Seite und damit von den Passagieren entfernt angeordnet. Außerhalb von Haltestellen sind die Stromschienen 55 dann zwischen den beiden Gleisen 51 angeordnet. Das hat den Vorteil, dass die Stromschienen 55 für die beiden Fahrtrichtungen außerhalb von Haltestellen benachbart liegen und es dort zwischen den Gleisen nur einen Hochspannungsraum gibt.

Da die Stromschienen 55 vom Triebwagen 100 aus in Fahrtrichtung betrachtet sowohl linkseitig als auch rechtsseitig angeordnet sein können, weist der Triebwagen 100 typischerweise einen rechtsseitigen ersten Stromabnehmer 1 und einen rechtsseitigen zweiten Stromabnehmer 3 als auch einen linksseitigen ersten Stromabnehmer 2 und einen linksseitigen zweiten Stromabnehmer 4 auf, die zur Kontaktierung mit der Stromschiene 55 jeweils als Seitenstromabnehmer ausgeführt sein können.

Wie in Fig. 1B dargestellt wird, sind die Stromabnehmer 1 - 4 typischerweise an einem Untergestell, noch typischer nahe einer Drehachse eines Drehgestells des Triebwagens 100 befestigt. Dies erleichtert das Halten des elektrischen Kontakts zur Stromschiene 55 in Kurven.

In dem exemplarischen Ausführungsbeispiel von Fig. 1A sind die ersten Stromabnehmer 1, 2 und die zweiten Stromabnehmer 3, 4 jeweils miteinander und einer Zugsammelschiene 10 des Triebwagens 100 elektrisch verbunden (in ohmschem Kontakt miteinander), typischerweise niederohmig miteinander verbunden. Über die Zugsammelschiene 10 (und nicht dargestellte Masseverbindungen zur Schiene) können zwei elektrische Antriebseinheiten 11, 12 des Triebwagens 100 versorgt werden. Dabei kann vorgesehen sein, die Antriebseinheiten 11, 12 über jeweilige in Normalstellung geschlossene Schaltschütze 91, 92 mit der Zugsammelschiene 10 zu verbinden. Durch die Schaltschütze 91, 92 können die Antriebseinheiten 11, 12 vor Überströmen in einem Fehlerfall geschützt werden.

Da der Triebwagen 100 sowohl in einem ersten Wagenteil 100A als auch in einem zweiten Wagenteil 100B jeweils Stromabnehmer 1, 2, 3, 4 hat, die mit der Stromschiene 55 kontaktiert (kontaktierbar) sind und deren Abstand b in Fahrtrichtung größer als die Länge a der überbrückbaren Netztrennstelle(n) 50 des Transportsystems 1000 ist, steht zumindest einer der vier Stromabnehmer 1, 2, 3, 4 in Kontakt mit der Stromschiene 55. Daher kann der Triebwagen 100 die Netztrennstelle(n) 50 überfahren, ohne das seine elektrische Stromversorgung unterbrochen wird, wenn die beiden durch die Netztrennstelle 50 voneinander getrennten Abschnitte 55A, 55B der Stromschiene 55 von ihrem jeweiligen Unterwerk 13, 14 mit einem betriebsgemäßen elektrischem Gleichstrom versorgt werden.

Typischerweise ist der Abstand b zumindest 3 m größer als die Länge a der überbrückbaren Netztrennstelle(n) 50 des Transportsystems 1000.

Zwischen dem ersten Abschnitt 10A der Zugsammelschiene 10 und dem zweiten Abschnitt 10B der Zugsammelschiene 10 ist nur ein Schaltschütz 6 geschaltet, das in der Normalstellung oder Ruhestellung geschlossen ist (und damit die Abschnitte 10A, 10B elektrisch miteinander verbindet). Dies ermöglicht, dass einerseits beide elektrische Antriebseinheiten 11, 12 im angetriebenen Zustand mit elektrischer Energie versorgt werden, auch wenn nur einer der vier Stromabnehmer 1, 2, 3, 4 in Kontakt mit der Stromschiene 55 ist, und andererseits, dass beide elektrische Antriebseinheiten 11, 12 im generatorischen Zustand elektrischer Energie in ein Unterwerk 13 zurückspeisen können, auch wenn nur einer der vier Stromabnehmer 1, 2, 3, 4 in Kontakt mit der Stromschiene 55 ist. Letzteres wird in Fig. 1A durch die gestrichelten Pfeile dargestellt, die einen möglichen rückspeisenden Stromfluss symbolisieren, wenn der Triebwagen 100 im Stützbremsbetrieb beim Überfahren der Netztrennstelle 50 nur über den Stromabnehmer 1 mit der Stromschiene 55 (dem Abschnitt 55A) kontaktiert ist.

Dies ermöglicht ein ruckfreies Überfahren der Netztrennstelle 50 und zudem mehr Bremsenergie zurückzuspeisen als andere Triebfahrzeuge, da immer beide elektrische Antriebseinheiten 11, 12 des Triebfahrzeugs 100 im generatorischen Betrieb elektrische Energie rückspeisen können.

Figur 1A zeigt den Triebwagen 100 beim Überfahren der Netztrennstelle 50 in einem Zustand, in dem der Stromabnehmer 1 mit dem Abschnitt 55A und damit dem Unterwerk 13 verbunden ist und der Stromabnehmer 3 mit dem Abschnitt 55B und damit dem Unterwerk 14 verbunden ist. Über das normalerweise geschlossene Schaltschütz 6 können dann bei ungleichmäßig ausgelasteten Unterwerken 11, 12 Ausgleichströme (nicht dargestellt) fließen. Dadurch kann die Netzstabilität erhöht werden.

Das Schaltschütz 6 wird daher typischerweise so ausgewählt, das es bei erwarteten Ausgleichströmen bis zur Höhe des doppelten Nennstroms des Fahrzeugs noch nicht in den unterbrechenden (offenen) Zustand schaltet.

Erst wenn der Strom durch das Schaltschütz 6 und damit ein Strom zwischen den ersten Stromabnehmern 1, 2 und den zweiten Stromabnehmern 3, 4 einen vorbestimmten ersten Schwellwert überschreitet und/oder wenn ein Anstieg des Stromflusses einen vorbestimmten zweiten Schwellwert überschreitet, trennt das Schaltschütz 6 die elektrische Verbindung zwischen den Abschnitten 10A, 10B der Zugsammelschiene 10.

Der ersten Schwellwert und der zweite Schwellwert können so gewählt werden, dass sie jeweils geringer als die entsprechenden Schwellenwerte der Einspeiseschaltschütze 7, 8 sind.

Beispielsweise können der ersten Schwellwert und der zweite Schwellwert so bestimmt sein, dass sie einen mit einem unter dem Wert eins liegenden Sicherheitsfaktor multiplizierten Kurzschlussstrom bzw. Kurzschlussstromanstieg entsprechen, der sich ergeben würde, wenn in der in Fig. 1A dargestellten Kontaktierung bei einem Fehlerfall, in dem eines der beiden Unterwerke 13, 14 Masse auf den Stromschienenabschnitt 55A, 55B ausgibt, während das andere Unterwerke 14, 13 eine betriebsgemäße Versorgung des Stromschienenabschnitts 55B, 55A bereitstellt.

Dadurch kann eine Unterwerksauslösungen vermieden werden, die bei einem Schienenfahrzeug ohne entsprechendes Schaltschütz 6 auftreten würde, wenn es die Netztrennstelle 50 im Fehlerfall eines Unterwerks 13, 14 überfährt.

Gemäß einer Ausführungsform weist ein Schienenfahrzeug einen ersten Stromabnehmer, einen zweiten Stromabnehmer und ein Schaltschütz auf. Das Schaltschütz ist eingerichtet, eine elektrische Verbindung zwischen dem ersten Stromabnehmer und dem zweiten Stromabnehmer zu trennen, wenn ein Stromfluss durch das Schaltschütz einen ersten Schwellwert überschreitet und/oder wenn ein Anstieg des Stromflusses einen zweiten Schwellwert überschreitet.

Wenngleich hierin spezifische Ausführungsformen dargestellt und beschrieben worden sind, liegt es im Rahmen der vorliegenden Erfindung, wie in den beigefügten Ansprüchen definiert, die gezeigten Ausführungsformen geeignet zu modifizieren, ohne vom Schutzbereich der vorliegenden Erfindung abzuweichen.

### Bezugszeichenliste

- 1, 2: erster Seitenstromabnehmer
- 3, 4: zweiter Seitenstromabnehmer
- 5: Schiene
- 6, 91, 92: Schaltschütze des Schienenfahrzeugs
- 7,8: Einspeiseschaltschütze
- 10: Zugsammelschiene
- 10A, 10B: Abschnitte der Zugsammelschiene
- 11, 12: elektrische Antriebseinheiten
- 13, 14: Unterwerke
- 50: Netztrennstelle
- 55: Stromschiene
- 55A, 55B: Abschnitte der Stromschiene
- 100: Schienenfahrzeug, Triebwagen
- 1000: Transportsystem

## Patentansprüche

1. Schienenfahrzeug (100), umfassend:
einen ersten Stromabnehmer (1, 2);
einen zweiten Stromabnehmer (3, 4); und
ein Schaltschütz (6), das elektrisch mit dem ersten Stromabnehmer (1, 2) und dem zweiten Stromabnehmer (3, 4) verbunden ist und eingerichtet ist, einen Stromfluss zwischen dem ersten Stromabnehmer (1, 2) und dem zweiten Stromabnehmer (3, 4) zu unterbrechen, wenn der Stromfluss einen ersten Schwellwert überschreitet und/oder wenn ein Anstieg des Stromflusses einen zweiten Schwellwert überschreitet,
**dadurch gekennzeichnet, dass** nur ein Schaltschütz (6) zwischen dem ersten Stromabnehmer (1, 2) und dem zweiten Stromabnehmer (3, 4) angeordnet ist.

2. Schienenfahrzeug (100) nach Anspruch 1, wobei das Schienenfahrzeug (100) weiter eine Zugsammelschiene (10) umfasst, die das Schaltschütz (6) mit dem ersten Stromabnehmer (1, 2) und dem zweiten Stromabnehmer (3, 4) elektrisch verbindet.

3. Schienenfahrzeug (100) nach einem der vorangehenden Ansprüche, wobei der erste Stromabnehmer (1, 2) und der zweite Stromabnehmer (3, 4) in einem jeweiligen Fahrwerksbereich (15A, 15B) des Schienenfahrzeugs (100) angeordnet ist.

4. Schienenfahrzeug (100) nach einem der vorangehenden Ansprüche, wobei der erste Stromabnehmer (1, 2) in einem vorderen Wagenteil (100A) des Schienenfahrzeugs (100) angeordnet ist, und wobei der zweite Stromabnehmer (3, 4) in einem hinteren Wagenteil (100B) des Schienenfahrzeugs (100) angeordnet ist.

5. Schienenfahrzeug (100) nach einem der vorangehenden Ansprüche, wobei das Schienenfahrzeug (100) eine erste elektrische Antriebseinheit (11) aufweist, die elektrisch mit dem ersten Stromabnehmer (1, 2) verbunden ist, und wobei das Schienenfahrzeug (100) eine zweite elektrische Antriebseinheit (12) aufweist, die elektrisch mit dem zweiten Stromabnehmer (3, 4) verbunden ist.

6. Schienenfahrzeug (100) nach Anspruch 5, wobei die erste elektrische Antriebseinheit (11) und/oder die zweite elektrische Antriebseinheit (12) eingerichtet sind, eine elektrische Leistung in einem Bremsbetrieb des Schienenfahrzeugs (100) zurückzuspeisen.

7. Schienenfahrzeug (100) nach einem der vorangehenden Ansprüche, wobei das Schienenfahrzeug (100) ein Triebwagen für einen Nahverkehrszug ist.

8. Schienenfahrzeug (100) nach einem der vorangehenden Ansprüche, wobei der erste Stromabnehmer (1, 2) und der zweiten Stromabnehmer (3, 4) jeweils als Seitenstromabnehmer ausgeführt sind.

9. Transportsystem (1000), umfassend:
eine Schiene (5);
eine entlang der Schiene angeordnete Stromschiene (55); und
ein Schienenfahrzeug (100) nach einen der vorangehenden Ansprüche, dessen erster und zweiter Stromabnehmer (1, 2) mit der Stromschiene (55) verbindbar sind, wenn das Schienenfahrzeug (100) auf der Schiene (5) angeordnet ist.

10. Transportsystem nach Anspruch 9, wobei die Stromschiene (55) einen ersten Abschnitt (55A) und einen zweiten Abschnitt (55B), die durch eine Netztrennstelle (50) voneinander getrennt sind, umfasst, wobei der erste Abschnitt (55A) über ein erstes Einspeiseschütz (7) mit einer ersten Gleichstromspannungsquelle verbindbar ist, und das eingerichtet ist, einen durch das erste Einspeiseschütz (7) fließenden ersten Strom erst dann zu unterbrechen, wenn eine Stromstärke des ersten Stroms einen Schwellwert überschreitet, der größer als der erste Schwellwert ist, und/oder wenn ein Anstieg der Stromstärke des ersten Stroms einen Schwellwert überschreitet, der größer als der zweite Schwellwert ist, und wobei der zweite Abschnitt (55B) über ein zweites Einspeiseschütz (8) mit einer zweiten Gleichstromspannungsquelle verbindbar ist, und das eingerichtet ist, einen durch das zweite Einspeiseschütz (8) fließenden zweiten Strom erst dann zu unterbrechen, wenn eine Stromstärke des zweiten Stroms einen Schwellwert überschreitet, der größer als der erste Schwellwert ist, und/oder wenn ein Anstieg der Stromstärke des zweiten Stroms einen Schwellwert überschreitet, der größer als der zweite Schwellwert ist.

11. Transportsystem nach Anspruch 10, wobei ein Abstand (b) zwischen dem ersten Stromabnehmer (1, 2) und dem zweiten Stromabnehmer (3, 4) größer als eine Länge (a) der Netztrennstelle (50) ist.

## Claims

1. A rail vehicle (100), comprising:
a first current collector (1, 2);
a second current collector (3, 4); and
a contactor (6), electrically connected to the first current collector (1, 2) and to the second current collector (3, 4), and arranged to interrupt a current flow between the first current collector (1, 2) and the second current collector (3, 4) when the current flow exceeds a first threshold value and/or when an increase in the current flow exceeds a second threshold value,
**characterised in that** only a single contactor (6) is arranged between the first current collector (1, 2) and the second current collector (3, 4).

2. The rail vehicle (100) according to claim 1, wherein the rail vehicle (100) further comprises a train busbar (10) electrically connecting the contactor (6) to the first current collector (1, 2) and to the second current collector (3, 4).

3. The rail vehicle (100) according to any one of the preceding claims, wherein the first current collector (1, 2) and the second current collector (3, 4) are arranged in a respective chassis section (15A, 15B) of the rail vehicle (100).

4. The rail vehicle (100) according to any one of the preceding claims, wherein the first current collector (1, 2) is arranged in a front vehicle portion (100A) of the rail vehicle (100), and wherein the second current collector (3, 4) is arranged in a rear vehicle portion (100B) of the rail vehicle (100).

5. The rail vehicle (100) according to any one of the preceding claims, wherein the rail vehicle (100) comprises a first electric drive unit (11) electrically connected to the first current collector (1, 2), and wherein the rail vehicle (100) comprises a second electric drive unit (12) electrically connected to the second current collector (3, 4).

6. The rail vehicle (100) according to claim 5, wherein the first electric drive unit (11) and/or the second electric drive unit (12) are arranged to feed back an electric power in a braking operation of the rail vehicle (100).

7. The rail vehicle (100) according to any one of the preceding claims, wherein the rail vehicle (100) is a railcar for a commuter train.

8. The rail vehicle (100) according to any one of the preceding claims, wherein the first current collector (1, 2) and the second current collector (3, 4) are each configured as lateral current collectors.

9. A transport system (1000) comprising:
a rail (5);
a conducter rail (55) arranged along the rail; and
the rail vehicle (100) according to any one of the preceding claims, the first and second current collectors (1, 2) of which are connectable to the conductor rail (55) when the rail vehicle (100) is arranged on the rail (5).

10. The transport system according to claim 9, wherein the conductor rail (55) comprises a first section (55A) and a second section (55B) separated from each other by a power grid disconnect (50), wherein the first section (55A) is connectable to a first DC voltage source via a first feed contactor (7), and which is arranged to interrupt a first current flowing through the first feed contactor (7) only when an amperage of the first current exceeds a threshold greater than the first threshold and/or when an increase in the amperage of the first current exceeds a threshold greater than the second threshold, and wherein the second section (55B) is connectable to a second DC voltage source via a second feed contactor (8), and which is arranged to interrupt a second current flowing through the second feed contactor (8) only when an amperage of the second current exceeds a threshold greater than the first threshold and/or when an increase in the amperage of the second current exceeds a threshold greater than the second threshold.

11. The transport system according to claim 10, wherein a distance (b) between the first current collector (1, 2) and the second current collector (3, 4) is greater than a length (a) of the power grid disconnect (50).

## Revendications

1. Véhicule ferroviaire (100), comprenant :
un premier collecteur de courant (1, 2) ;
un second collecteur de courant (3, 4) ; et
un contacteur de commutation (6) connecté électriquement au premier collecteur de courant (1, 2) et au second collecteur de courant (3, 4) et conçu pour interrompre un flux de courant entre le premier collecteur de courant (1, 2) et le second collecteur de courant (3, 4) lorsque le flux de courant est supérieur à une première valeur seuil et/ou lorsqu'une augmentation du flux de courant est supérieure à une seconde valeur seuil,
**caractérisé en ce que** seulement un contacteur de commutation (6) est disposé entre le premier collecteur de courant (1, 2) et le second collecteur de courant (3, 4).

2. Véhicule ferroviaire (100) selon la revendication 1, dans lequel le véhicule ferroviaire (100) comprend en outre une barre omnibus de train (10) connectant électriquement le contacteur de commutation (6) au premier collecteur de courant (1, 2) et au second collecteur de courant (3, 4).

3. Véhicule ferroviaire (100) selon l'une quelconque des revendications précédentes, dans lequel le premier collecteur de courant (1, 2) et le second collecteur de courant (3, 4) sont disposés chacun dans une zone de châssis (15A, 15B) respective du véhicule ferroviaire (100).

4. Véhicule ferroviaire (100) selon l'une quelconque des revendications précédentes, dans lequel le premier collecteur de courant (1, 2) est disposé dans une partie avant de wagon (100A) du véhicule ferroviaire (100), et dans lequel le second collecteur de courant (3, 4) est disposé dans une partie arrière de wagon (100B) du véhicule ferroviaire (100).

5. Véhicule ferroviaire (100) selon l'une quelconque des revendications précédentes, dans lequel le véhicule ferroviaire (100) comporte une première unité d'entraînement (11) électrique, laquelle est connectée électriquement au premier collecteur de courant (1, 2), et dans lequel le véhicule ferroviaire (100) comporte une seconde unité d'entraînement (12) électrique, laquelle est connectée électriquement au second collecteur de courant (3, 4).

6. Véhicule ferroviaire (100) selon la revendication 5, dans lequel la première unité d'entraînement (11) électrique et/ou la seconde unité d'entraînement (12) électrique sont conçues pour renvoyer de la puissance électrique en mode de freinage du véhicule ferroviaire (100).

7. Véhicule ferroviaire (100) selon l'une quelconque des revendications précédentes, dans lequel le véhicule ferroviaire (100) est un autorail pour un train de trafic omnibus.

8. Véhicule ferroviaire (100) selon l'une quelconque des revendications précédentes, dans lequel le premier collecteur de courant (1, 2) et le second collecteur de courant (3, 4) sont chacun conçus sous la forme de collecteur de courant latéral.

9. Système de transport (1000), comprenant :
un rail (5) ;
un rail conducteur (55) disposé le long du rail ; et
un véhicule ferroviaire (100) selon l'une quelconque des revendications précédentes, dont les premier et second collecteurs de courant (1, 2) sont aptes à être connectés au rail conducteur (55) lorsque le véhicule ferroviaire (100) est disposé sur le rail (5).

10. Système de transport selon la revendication 9, dans lequel le rail conducteur (55) comprend une première section (55A) et une seconde section (55B) séparées l'une de l'autre par un point de séparation de réseau (50), dans lequel la première section (55A) peut être connectée à une première source de tension de courant continue par l'intermédiaire d'un premier contacteur d'alimentation (7) et est conçue pour n'interrompre un premier courant traversant le premier contacteur d'alimentation (7) que lorsqu'une intensité de courant du premier courant est supérieure à une valeur seuil, laquelle est supérieure à la première valeur seuil, et/ou lorsqu'une augmentation de l'intensité de courant du premier courant est supérieure à une valeur seuil, laquelle est supérieure à la seconde valeur seuil, et dans lequel la seconde section (55B) peut être connectée à une seconde source de tension de courant continue par l'intermédiaire d'un second contacteur d'alimentation (8) et est conçue pour n'interrompre un second courant traversant le second contacteur d'alimentation (8) que lorsqu'une intensité de courant du second courant est supérieure à une valeur seuil, laquelle est supérieure à la première valeur seuil et/ou lorsqu'une augmentation de l'intensité de courant du second courant est supérieure à une valeur seuil, laquelle est supérieure à la seconde valeur seuil.

11. Système de transport selon la revendication 10, dans lequel une distance (b) entre le premier collecteur de courant (1, 2) et le second collecteur de courant (3, 4) est supérieure à une longueur (a) du point de séparation de réseau (50).
